Europäisches Patentamt

European Patent Office

Office européen des brevets

(11) Publication number: **0 206 672**
**B1**

# EUROPEAN PATENT SPECIFICATION

(45) Date of publication of patent specification: **30.05.90**

(21) Application number: **86304530.8**

(22) Date of filing: **12.06.86**

(51) Int. Cl.5: **C 08 J 7/18, C 08 J 5/18,**
**B 41 M 5/26, B 41 M 1/30,**
**G 03 G 5/10**

(54) **Plastic film for thermal transfer recording media.**

(30) Priority: **17.06.85 JP 131315/85**

(43) Date of publication of application:
**30.12.86 Bulletin 86/52**

(45) Publication of the grant of the patent:
**30.05.90 Bulletin 90/22**

(84) Designated Contracting States:
**DE FR GB IT**

(56) References cited:
**EP-A-0 071 828**
**DE-A-2 802 135**

**Patent Abstracts of Japan, unexamined**
**applications, M field, vol. 4, no. 76, June 3, 1980**
**The Patent Office Japanese Government page**
**151 M14**

(73) Proprietor: **Kao Corporation**
**14-10, Nihonbashi Kayabacho 1-chome**
**Chuo-Ku Tokyo 103 (JP)**

(72) Inventor: **Yamaguchi, Shinichiro**
**1130, Nishihama**
**Wakayama-shi Wakayama (JP)**
Inventor: **Sakai, Koichi**
**1450, Nishihama**
**Wakayama-shi Wakayama (JP)**

(74) Representative: **Bannerman, David Gardner**
**et al**
**Withers & Rogers 4 Dyer's Buildings Holborn**
**London, EC1N 2JT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# EP 0 206 672 B1

**Description**

This invention relates to a plastic film which is used as a support which is one component of a thermal transfer recording medium used in printers, typewriters, copying machines, facsimiles, etc., having a thermal transfer recording system.

There are already known thermal transfer recording media which are composed of a support and a horizontally solid colorant applied thereto and capable of softening and melting at 50°C to 140°C and which are heated from the lower surface side of the support to allow said colorant to soften, melt and transfer to a recording body. The supports conventionally used in these recording media include plastic films such as polyethylene terephthalate, cellophane, polycarbonate, triacetylcellulose and nylon, and papers such as wood-free paper, glassine paper and tracking paper. However, plastic films have a drawback that because the support is in contact with a thermal head under pressure, it sticks to the thermal head by melting, i.e. the so-called sticking phenomenon occurs so that the thermal transfer recording medium cannot be fed smoothly. On the other hand, papers have a drawback that their dimensional stability is not sufficient because they are influenced by moisture.

A proposal was made of a thermal transfer recording medium in which a water-insoluble, heat-resistant protective layer comprising a resin selected from the group consisting of silicone resins, epoxy resins, melamine resins, phenolic resins, fluorocarbon resins, polyimide resins, and nitrocellulose is applied to the lower surface of the support in order to improve the drawbacks of plastic films, such as sticking (see Japanese Patent Laid-Open No. 7467/1979). Further, another proposal was made of a thermal transfer recording medium in which a water-soluble, heat-resistant protective layer comprising a member selected from the group consisting of cellulose derivatives such as hydroxyethylcellulose, ethylcellulose, methylcellulose, and carboxymethylcellulose, polyvinyl alcohol, polyacrylamide, polyvinylpyrrolidone, starch and its derivatives, sodium alginate, casein, gelatin, shellac, and styrene/maleic anhydride copolymers, was applied to the lower surface of the support (see Japanese Patent Laid-Open No. 194893/1984).

However, the provision of the above heat-resistant protective layer necessitates a step of coating or laminate coating, so that the production process for such a thermal transfer recording medium is complicated and has a drawback such as a high cost. On the other hand, when a water-insoluble, heat-resistant substance in the form of an organic solvent solution is applied, it is necessary to recover the organic solvent, and when the substance is applied by laminate coating, there is a drawback that the reduction of its film thickness is difficult. On the other hand, when a water-soluble heat resistant substance is used, the support need be subjected to a surface treatment such as corona discharge or vacuum glow discharge for lack of its adhesion to the substance, so that there is, for example, a drawback that the production process becomes more complicated. Besides, when the heat resistant protective layer is applied to the support, the total thickness of the support is increased, which adversely affect its thermal conductivity.

Japanese laid-open application JP—A—55039379 discloses a heat-sensitive recording material comprising a vinyl compound, a sensitiser, and a colorant. The vinyl compound has a specified softening temperature and can be polymerised by UV radiation.

EP—A—71828 discloses the preparation of a cross-linked polyolefin by irradiation a mixture of polyolefin and 0.3 and 20 wt.% of vinyl acetate.

It is an object of this invention to provide a heat-resistant plastic film suitable for thermal transfer recording and which can be easily produced and undergoes no sticking phenomenon during its use.

According to the invention we provide a plastic film, suitable for thermal transfer recording media, which comprises a composition which is obtainable by crosslinking by irradiation a composition comprising 100 parts by weight of a polyolefin and 0.1 or more part by weight of a substance which can be crosslinked by irradiation, and which further comprises thereon a colorant layer.

It is preferable that said composition comprises from 0.1 to 50 parts by weight of said substance. The plastic film of the invention is normally obtained by blending said polyolefin and said substance, moulding the blend into film and irradiating the film.

The plastic film of this invention can be produced by a process in which a polyolefin resin is kneaded together with a compound or compounds which can be crosslinked by irradiation, the mixture is formed into a plastic film by a T die extruder or an inflation extruder which is a general molding machine for plastic films and the formed film is irradiated and a colorant layer is applied to the film. Alternately, it can be produced by a process in which a mixture after kneading is irradiated with a small dose of a radiation, the irradiated mixture is formed into a film, and this film is irradiated again and a colorant layer is applied to the film or a process in which a colorant layer is applied to the above unirradiated polyolefin film and this film is irradiated, though the production process of the film of this invention is not limited thereto. However, because it is impossible to mold a resin composition having crosslinkages which are preformed to such a degree that the object of this invention can be attained by a thin film by a usual molding process, the production process in which the mixture after said kneading is formed into a film after it has been sufficiently irradiated is not suitable for practicing this invention.

Examples of the polyolefin resins which can be used in this invention include homopolymers such as polyethylene, polypropylene, polybutene, polyisobutylene, polypentene, and polyhexene, and copolymers such as ethylene/propylene copolymers and ethylene/vinyl acetate copolymers, as well as graft polymers thereof and mixtures comprising at least two of the above homopolymers, copolymers and graft polymers. In addition, it is possible to use mixtures obtained by adding, if necessary, fillers such as reinforcements, lubricants, plasticizers, stabilizers, antioxidants, ultraviolet absorbers, antistatic agents, and pigments to the above polyolefin resins.

The compounds which can be crosslinked by irradiation and which can be used in this invention may be any compounds that have at least two ethylenically unsaturated bonds in the molecule, and examples of them include monomers such as trimethylolpropane triacrylate, trimethylolpropane trimethacrylate, tetramethylolmethane tetraacrylate, and tetramethylolmethane tetramethacrylate, polyacrylates or polymethacrylates such as epoxyacrylates resin, epoxymethacrylate resin, urethane acrylate resin, urethane methacrylate resin, novolac acrylate resin, novolak methacrylate resin, ester acrylate resin, ester methacrylate resin, amide acrylate resin, amide methacrylate resin, imide acrylate resin, and imide methacrylate resin, polyallyl compounds derived by replacing "acrylate" in the above compounds by "allyl", prepolymers such as styrene-modified products thereof, and polymers such as butadiene copolymers (or homopolymers), and isoprene copolymers (or homopolymers), and mixtures of these monomers, prepolymers and polymers can also be used.

The reason why at least 0.1 part by weight is specified as the amount of the compound which can form crosslinkages by irradiation with a radiation and is added as a radiation crosslinking agent to a polyolefin resin in this invention is that when this amount is smaller than the above, the degree of crosslinking by irradiation with a radiation is low and therefore the effect of radiation crosslinking can hardly be attained.

With respect to the thickness of the plastic film for thermal transfer recording media of this invention, the thinner, the better, and it has a thickness of preferably about 3~30 µm.

The radiation sources which can be used in this invention may be any ionizing radiations, and more particularly, radiations such as electron beams, neutron beams, α-rays, β-rays, γ-rays, X-rays, proton rays, and deuteron rays can be mentioned, for example. Among them, electron beams and X-rays are desirable. With respect to the dose of radiation, a dose of about 0.1~50 Mrad will suffice.

The crosslinked composition used in this invention is used as a support of a thermal transfer recording medium, while the heat-meltable colorant layer applied to the support may be formed from well-known, heat-meltable inks which are not particularly limited. Such a heat-meltable ink is a composition comprising a colorant and a binder, and the thermal transfer recording medium may be produced by forming an about 1~20 µm-thick colorant layer on a support by hot melt coating of said heat-meltable ink or by solvent coating of a coating solution formed by dispersing said composition in a suitable solvent. The colorants which can be used include dyes and pigments, such as carbon black, which have heretofore been used in the field of most of dry toners for copying machines. Examples of the binders include waxes such as carnauba wax Japan wax, and bee wax. Further, the heat-sublimable solid colorant layer can be formed from well-known sublimable inks as such, and are not particularly limited. Such sublimable inks are compositions comprising a sublimable dye suitably selected for example from among monoazo dyes, anthraquinone dyes, and nitrodiphenylamine dyes, a binder, a dispersant, and a thermal transfer recording medium is produced by forming a colorant about 1~20 µm-thick on a support by solvent coating of a coating solution formed by dispersing a sublimable ink in a suitable solvent.

Example

Examples and comparative examples of this invention will now be described in further detail, though this invention is not limited to these examples. The degree of crosslinking formed is represented by the measured gel fraction of a polymer. This gel fraction was determined as follows. A polymer was extracted with xylene at 100°C for 24 hr, and withdrawn from the solvent and dried.

The gel fraction of the plastic film of this invention is preferably 50% or above, particularly preferably 60% or above.

$$\text{Gel fraction (\%)} = \frac{\text{Weight of sample after extraction}}{\text{Weight of sample before extraction}} \times 100$$

The plastic film for thermal transfer recording media of this invention has high heat resistance. A thermal transfer recording medium produced by using this film as a support undergoes no sticking phenomenon at a high surface temperature of a thermal head, because the heat resistance of the support is high. Therefore, it is effective in that it can suitably cope with the speed-up of a thermal printer or the like.

In the following examples, parts are all parts by weight.

Example 1

100 parts of high-density polyethylene (Hi-Zex 7000F, a product of Mitsui Petrochemical Industries, Ltd.) and 10 parts of a bisphenol methacrylate resin were kneaded together in a roll mill, ground, and fed to a T die extruder to obtain a 10 µm-thick plastic film. This film was irradiated with electron beams (10 Mrad) from an electron beam irradiator (Curetron, a product of Nisshin High-Voltage Co., Ltd.) to obtain a plastic film for thermal transfer recording medium. A film not subjected to the electron beam irradiation was used as Comparative Example 1.

3

**Comparative example 2**

High-density polyethylene (Hi-Zex 7000F) was fed to a T die extruder to mold a 10 μm-thick plastic film, and this film was irradiated with electron beams (10 Mrad) from an electron beam irradiator to obtain a crosslinked polyethylene film.

**Example 2**

100 parts of low-density polyethylene (NUC-8012, a product of Nippon Unicar) and 15 parts of 1,2-polybutadiene resin (RB820, a product of Nippon Gosei Co., Ltd.) were mixed together and fed to an inflation molding machine to obtain an 8 μm-thick plastic film. This film was irradiated with electron beams (10 Mrad) from an electron beam irradiator to obtain a plastic film for thermal transfer recording media. A film not subjected to the electron beam irradiation was used as comparative Example 3.

**Example 3**

100 parts of ethylene/vinyl acetate copolymer (NUC-3760, VA content of 18%, a product of Nippon Unicar) and 5 parts of trimethylolpropane trimethacrylate were kneaded together, ground, and fed to a T die extruder to obtain a 12 μm-thick plastic film. This film was irradiated with electron beam (10 Mrad) from an electron beam irradiator to obtain a plastic film for thermal transfer recording media. A film not subjected to the electron beam irradiation was used as Comparative Example 4.

**Comparative Examples 5 and 6**

A 10% aqueous solution of polyvinyl alcohol, which was a water-soluble, heat-resistant resin, was applied to corona discharge-treated polyester films to form supports for thermal transfer recording media, having thicknesses of 0.5 μm and 1.5 μm, respectively. The 0.5 μ-thick support was used as Comparative Example 5, and the 1.5 μm-thick support was used as Comparative example 6.

Thermal transfer recording media (Examples 1 and 3, und Comparative Examples 1, 4, 5 and 6) were prepared by coating one side of each of the above Examples and Comparative Examples with a wax-type heat-meltable ink prepared by mixing the following components:

| | Parts |
|---|---|
| Carnauba wax | 50 |
| Paraffin wax | 50 |
| Microcrystalline wax | 20 |
| Vinyl acetate/ethylene copolymer | 10 |
| Carbon black | 20 |

by means of a wire bar or a gravure roll so that the thickness might be about 4 μm.

On the other hand, thermal transfer recording media (Example 2 and Comparative Examples 2 and 3) were prepared by coating the films with a dye-type dispersant, used in place of the above wax-type heat-meltable ink, comprising the following components:

dye (Kayaron Fast Orange GR, a product of Nippon Kayaku)

| | Parts |
|---|---|
| $O_2N$—⟨⟩—$N=N$—⟨⟩—$NH_2$ | 50 |
| Methylcellulose | 20 |
| Sodium dibutylnaphthalenesulfonate (dispersant) | 45 |
| Water | 385 |

by means of a wire bar or a gravure roll so that the amount of the adherent dye-type dispersant might be 1.5 g/m².

The thermal transfer recording media prepared in this way were evaluated for their sticking by printing by transfer to commercially available woodfree paper by using thermal transfer printers (NP-300, a prdouct of Yokogawa Hokushin Denki, and N5234-10, a product of Nippon Electric Co., Ltd.)

4

Table 1 shows the results of the evaluation of the gel fractions and sticking of the plastic films.

TABLE 1

|  | Gel fraction (%) | Colorant layer | Sticking |
|---|---|---|---|
| Ex. 1 | 73 | Wax-type | Good |
| Ex. 2 | 87 | Dye-type | Good |
| Ex. 3 | 65 | Wax-type | Good |
| Comp. 1 | 0.2 | Wax-type | Poor |
| Comp. 2 | 43 | Dye-type | Poor |
| Comp. 3 | 0.1 | Dye-type | Poor |
| Comp. 4 | 1.5 | Wax-type | Poor |
| Comp. 5 | — | Wax-type | Rather poor |
| Comp. 6 | — | Wax-type | Good |

## Claims

1. A plastic film, suitable for thermal transfer recording media, which comprises a composition which is obtainable by crosslinking by irradiation a composition comprising 100 parts by weight of a polyolefin and 0.1 or more part by weight of a substance which can be crosslinked by irradiation, and which further comprises thereon a colorant layer.

2. A plastic film as claimed in Claim 1, in which said composition comprises from 0.1 to 50 parts by weight of said substance.

3. A plastic film as claimed in Claim 1, which has been obtained by blending said polyolefin and said substance, moulding the blend into film and treating the film with irradiation and applying a colorant layer to the film.

4. A plastic film as claimed in Claim 1, in which said substance is an ethylenically unsaturated compound or polymer.

5. A plastic film as claimed in Claim 1, which has a thickness of 3 to 30 µm.

## Patentansprüche

1. Kunststoffilm, der für Wärmeübertragungsaufzeichnungsmedien geeignet ist und umfaßt eine Zusammensetzung, die erhältlich ist durch Strahlungsvernetzung einer Zusammensetzung mit 100 Gew.-Teilen eines Polyolefins und 0,1 oder mehr Gew.-Teilen einer Substanz, die durch Strahlung vernetzt werden kann, und der außerdem eine darauf aufgebrachte Färbemittelschicht aufweist.

2. Kunststoffilm nach Anspruch 1, in dem die Zusammensetzung 0,1 bis 50 Gew.-Teile der Substanz enthält.

3. Kunststoffilm nach Anspruch 1, der erhalten worden ist durch Mischen des Polyolefins mit der Substanz, Formen des Gemisches zu einem Film und Behandeln des Films durch Bestrahlen und Aufbringen einer Färbemittelschicht auf den Film.

4. Kunststoffilm nach Anspruch 1, in dem die Substanz eine ethylenisch ungesättigte Verbindung oder Polymer ist.

5. Kunststoffilm nach Anspruch 1, der eine Dicke von 3 bis 30 µm hat.

## Revendications

1. Feuille plastique, convenant pour des matériaux d'enregistrement par transfert thermique, qui comprend une composition obtenue par réticulation par irradiation d'une composition formée de 100 parties en poids d'une polyoléfine et 0,1 partie ou plus en poids d'une substance pouvant être réticulée par irradiation, et qui comprend encore une couche de colorant déposée sur elle.

2. Feuille plastique selon la revendication 1, dans laquelle ladite composition comprend de 0,1 à 50 parties en poids de ladite substance.

3. Feuille plastique selon la revendication 1 obtenu par mélange de ladite polyoléfine et de ladite substance, façonnage du mélange en une feuille, traitement de cette feuille par irradiation, et dépôt d'une couche de colorant sur ladite feuille.

4. Feuille plastique selon la revendication 1, dans laquelle ladite substance est un composé ou un polymère à insaturation éthylènique.

5. Feuille plastique selon la revendication 1, qui a une épaisseur de 3 à 30 µm.